# NEW EUROPEAN PATENT SPECIFICATION

(11) **EP 0 385 739 B2**
(45) Date of publication and mention of the opposition decision: **29.05.2002**
(45) Mention of the grant of the patent: 05.11.1997
(21) Application number: 90302100.4
(22) Date of filing: 28.02.1990
(51) Int. Cl.: G11B 20/10, G11B 5/035

(54) **Method and apparatus for writing a serial data pattern on a magnetic medium**
Verfahren und Gerät zur Aufzeichnung von Seriendatenmustern auf einem magnetischen Träger
Méthode et appareil d'écriture de données à configuration sérielle sur un support magnétique

(30) Priority: 03.03.1989 US 319251
(43) Date of publication of application: 05.09.1990
(73) Proprietor: Seagate Technology LLC, Scotts Valley, CA 95066 (US)
(72) Inventor: Genheimer, Stephen R., Mustang, Oklahoma 73064 (US); Holsinger, Steven V., Oklahoma City, Oklahoma 73120 (US)
(74) Representative: Kenyon, Sarah Elizabeth

(56) References cited:
- WO-A-88/02915
- DE-A- 3 338 877
- US-A- 4 633 336
- US-A- 4 885 645
- PATENT ABSTRACTS OF JAPAN vol. 13, no. 152 (P-856) 13 April 1989, & JP-A-63 313302 (NEC CORP) 21 December 1988,
- PATENT ABSTRACTS OF JAPAN vol. 9, no. 170 (P-373)(1893) 16 July 1985, & JP-A-60 047213 (NIPPON DENKI K.K.) 14 March 1985,
- PATENT ABSTRACTS OF JAPAN vol. 8, no. 188 (P-297)(1625) 29 August 1984, & JP-A-59 077608 (HITACHI SEISAKUSHO K.K.) 4 May 1984,
- PATENT ABSTRACTS OF JAPAN vol. 7, no. 260 (P-237)(1405) 18 November 1983, & JP-A-58 141410 (USAC DENSHI KOGYO K.K.) 22 August 1983,
- PATENT ABSTRACTS OF JAPAN vol. 12, no. 97 (P-682)(2944) 30 March 1988, & JP-A-62 229503 (TOSHIBA CORP) 8 October 1987,
- IBM TECHNICAL DISCLOSURE BULLETIN vol. 21, no. 9, February 1979, Armonk, USA pages 3773 - 3774; S.K. Hoo: "Dynamic precompensation system"
- PATENT ABSTRACTS OF JAPAN vol. 9, no. 210 (P-383)(1933) 28 August 1985, & JP-A-60 070506 (HITACHI SEISAKUSHO K.K.) 22 April 1985,
- PATENT ABSTRACTS OF JAPAN vol. 13, no. 428 (P-936) 25 September 1989, & JP-A-01 159868 (MITSUBISHI ELECTRIC CORP) 22 June 1989,

## Description

The present invention relates generally to a method and apparatus for writing a serial data pattern on a magnetic medium.

Digital data is conventionally written on a magnetic medium by the use of flux transitions. A flux transition occurs at a site where there is a change in the physical orientation of the medium, and hence a change in the magnetic flux generated by the medium at that site. When a flux transition is written by a transducing head on the medium in a disk drive assembly, it is written in the context of the previous flux transition and the subsequent flux transition. When the flux transition is read back by the head, it will typically be perceived to be at a different time interval in relation to each of the previous and the subsequent flux transitions. This phenomenon is known as peak shift, a generic term for the problem addressed by the present invention. Peak shift is a problem because if the change in time interval between flux transitions becomes great enough, the data pattern read back from magnetic medium may be incorrect, i.e. the flux transition may fall outside its detection "window".

One conventional method of dealing with peak shift is to administer pre-write compensation when writing a data pattern. This means that each flux transition to be written is moved by a short interval of time (early or late) on writing so that the peak shift is minimised or at least reduced in most cases. However, this approach does not overcome the problem in that only one pre-write compensation value or timing change is used even though a significant range of peak shift values is generally observed.

The present invention addresses this unresolved problem. In the present invention, the actual peak shifts promulgated by a given disk drive assembly under certain parameters are determined. The parameters covered are:
1. the head/media pair to be used for writing;
2. the writing site on the magnetic medium; and
3. the data pattern to be written.

U.S. Patent No. 4,633,336 describes the use of pre-write compensation based on these parameters but only in a limited sense. The system disclosed in this patent determines whether pre-write compensation is appropriate based on the parameters and then simply generates a set value of compensation for each parameter, if appropriate. JP-A-6313302 discloses another prior art method and apparatus.

In contrast, the present invention does not employ a set value for each parameter but rather a value based on the specific parameter or combination of parameters used. Other prior art pre-write compensation methods can be found in WO88/02915 (which is considered to represent the closest prior art), USP4885645 (published after the priority date of this application) and IBM Technical Disclosure Bulletin, Vol. 21, No. 9 February 1979. However, none of these prior art compensation methods analyse the data pattern to be written in such a detailed manner which enables optimum write delay values to be found accurately and quickly.

Consequently, the present invention offers much more flexibility than the prior art and it is possible by means of the invention to achieve an improved error rate in the read back of written data.

According to one aspect of the present invention, there is provided a method of writing a serial data pattern in the form of flux transitions on a magnetic medium, the method comprising:
receiving a serial data pattern from a data supply means ;
obtaining a write delay value, said delay value being dependent upon a writing head, writing location on the magnetic medium and the data pattern to be written;
analysing said data pattern to identify a flux change;
analysing the data pattern both preceding and following the flux change to derive a stereo typical data pattern;
retrieving said write delay value from a delay store which relates to the stereo typical data pattern;
writing the data pattern with the write delay value, and characterised by:
analysing the data pattern both preceding and following the flux change to determine data sub-patterns, and combining the data sub-patterns to derive the stereo typical data pattern.

According to another aspect of the present invention, there is provided a method of writing a serial data pattern in the form of flux transitions on a magnetic medium, the method comprising:
receiving a serial data pattern from a data supply means;
obtaining a write delay value, said delay value being dependent upon a writing head, writing location on the magnetic medium and the data pattern to be written;
writing the data pattern with the write delay value, and prior to writing the data pattern:
analysing said data pattern to identify a flux change; characterised by
analysing the data pattern both preceding and following the flux change to determine data sub-patterns;
retrieving a partial write delay value from a delay store for each data sub-pattern; and
combining the partial write delay value to obtain the write delay value.

According to another aspect of the present invention, there is provided an apparatus according to either claim 6 or 7.

As a result, it is possible to increase the performance tolerances for the disk drive assembly components such as transducing heads, disks, magnetic media and circuit elements.

The invention will be described further, by way of example, with reference to the accompanying drawings, in which:
Figure 1 is a schematic block diagram showing pre-write compensation apparatus in accordance with the present invention;
Figure 2 is a schematic diagram of delay circuitry of the pre-write compensation apparatus of Figure 1;
Figure 3 is a block diagram of one version of the delay circuitry of Figure 2 in more detail; and
Figure 4 is a block diagram of another version of the delay circuitry of Figure 2.

One of the most useful aspects of a computer is its ability to record and re-call data. Recording data is commonly referred to as "writing", while re-calling data is commonly referred to as "reading".

Physically speaking, writing is the process of changing a magnetic medium which is located on a disk or plastics tape. The present invention may be employed with either type of material but the following description will deal primarily with a hard disk drive assembly. The magnetic medium is typically composed of a material such as ferrous oxide. Each particle in the medium has an electro-magnetic orientation which has associated with it a property known as magnetic flux. When the magnetic flux of each particle is in the same direction, the medium is said to be magnetised. In materials suitably magnetisable, the particles tend to be grouped in magnetisation clusters called domains. When the electro-magnetic orientation of one domain is reversed in a magnetised magnetic medium, the magnetic flux of the domain is also reversed. Therefore, the magnetic flux of the subject domain is opposite in direction to the magnetic fluxes associated with other domains in the magnetised magnetic medium. A flux transition is said to exist at the boundary of such a domain. More specifically, a flux transition occurs at any location where adjacent domains have oppositely directed magnetic fluxes.

The smallest unit of information on a magnetic medium is a bit, or binary digit. A bit is simply a flux transition or a lack thereof. A bit corresponding to a flux transition at a given site is said to be a logical ONE bit. A bit corresponding to the absence of a flux transition at a given site is said to be a logical ZERO bit. A sequence of bits is called a data pattern. The number of bits necessary to make a data pattern will be discussed below. A data code is a system used for configuring a data pattern according to rules associated with the system.

Writing data is essentially the act of creating a series of flux transitions on a magnetic medium. Reading data is essentially the act of detecting or perceiving flux transitions which have been written. The act of reading or writing data on a magnetic medium is performed by a transducing head. The head electro-magnetically reads and writes flux transitions on the medium. A data pattern is indicated on the medium by means of ONES and ZEROS.

During reading, a phase locked oscillator is locked to the recovered series of flux transitions, and develops a timing window which is centered around each possible flux transition site. Flux transitions or the absence of the same in each window are converted to digital ONES and ZEROS. This digital data stream is then typically decoded into NRZ code and presented at a disk drive interface. The basic purpose of a disk drive write channel is to cause a flux transition to be written in its correct location on the disk surface. The function of the read channel is to detect the flux transitions within the desired timing windows. Any time the flux transition falls outside of the expected timing window, an error occurs.

There are many factors that can cause a flux transition to be shifted from the centre of the timing window. Defects in the medium can cause the flux transition to be moved or completely missing. Fortunately, these defects are usually stationary and can be detected and mapped around so that data is not written in that region. Noise, whether fundamental noise from the recording process, noise in the read back circuits or environmental noise, can cause a flux transition to be shifted from its normal position. While the effect of noise on an individual flux transition cannot be predicted, the average effect of noise can be measured. Noise can be assumed to cause flux transitions to be located in a Gaussian distribution around the centre of the detection window.

The fundamental limitation as to how such data can be written within a given area is controlled by how closely the flux transitions can be packed together. As flux transitions are moved closer together, the flux transitions begin to interact with each other due to the fundamental magnetic properties of the recording system. This effect is known as peak shift. The interaction of the flux transitions causes a shift in the location of the transitions in the timing window. Data recovery is usually achieved by differentiation to locate the peak of the flux transition, and the peak may be shifted in time as a result of bit crowding. Excessive peak shift can cause the flux transition to move outside the timing window, resulting in an error. Even peak shift which does not cause a flux transition to move all the way out of the window reduces the allowable margin for other effects such as noise.

The first two factors mentioned as causes of reading errors (media defects and noise) are addressed by control of the media manufacturing process and by careful circuit design to minimise sources of, and susceptibility to, noise. Peak shift effects are treated differently. The effects of peak shift are predictable and repeatable (at least statistically) based upon the actual flux transition spacing, and can be compensated to some extent by means of pre-write compensation techniques.

The traditional method of dealing with peak shift has been to administer pre-write compensation when writing a data pattern. That is, each flux transition written has been shifted in time by a small amount (in the order of nanoseconds) so that the peak shift is minimised or at least lessened in most cases. The problem with this approach is that only one value has been used for the pre-write compensation even though a significant range of peak shift values is generally present with respect to this one compensation value.

The pre-write compensation apparatus according to the present invention is designed to deal with the problem of peak shift in a more flexible way by pre-determining (on the basis of measurement and/or interpolation) a respective write delay value for each permutation of head, writing location, and data pattern. The writing location includes both the particular disk to be written on and the particular site for writing on that disk. The write delay value can be pre-determined without accounting for the head or can even be pre-determined taking into account any combination of the parameters of head and writing location. Instead of determining a write delay value based on an average peak shift value for the disk drive assembly, adapted write delay values are determined experimentally for each head, writing location, and data pattern (or some combination thereof). The adapted write delay values can then be recorded on a disk of the disk drive assembly for retrieval at each power-up sequence.

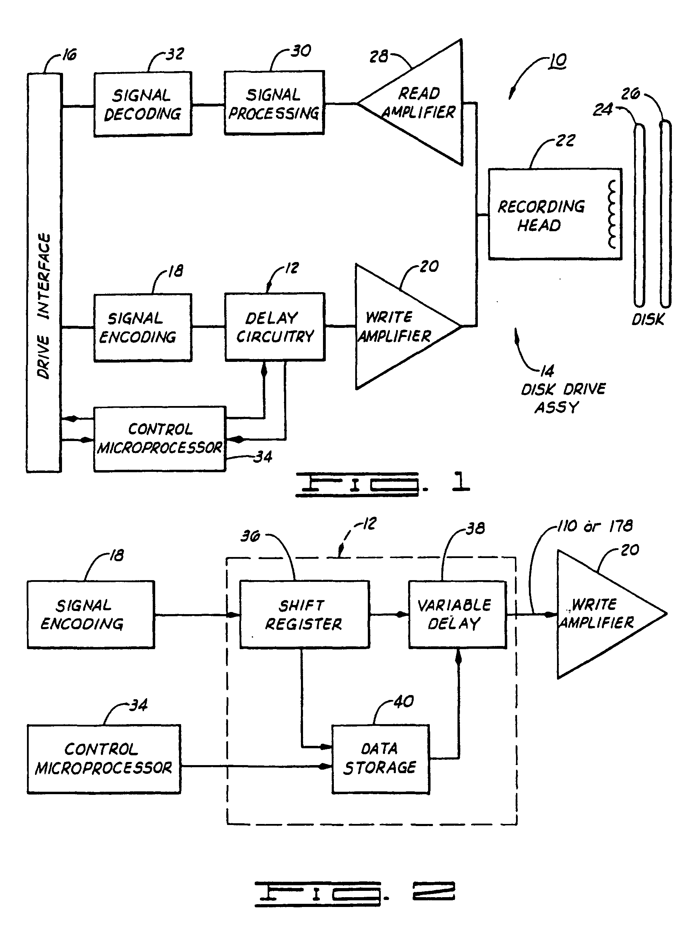

Referring now to the drawings in general and to Figure 1 in particular, pre-write compensation apparatus 10 comprises delay circuitry 12 and a disk drive assembly 14 (the disk drive assembly 14 is everything in Figure 1 other than the delay circuitry 12). The pre-write compensation apparatus 10 has a writing channel and reading channel, the writing channel beginning at a drive interface 16 and leading by way of a signal encoding block 18 to the delay circuitry 12, and thence through a write amplifier 20 to a recording head 22 which addresses a disk 24. Generally, a plurality of disks are provided but only two are shown in Figure 1 for expediency, a disk 26 being included therein for discussion of the operation of the present invention. The read channel includes the disk 24, the head 22, a read amplifier 28, a signal processing block 30, and a signal decoding block 32. A control micro-processor 34 participates in, and controls, both channels.

Figure 1 depicts schematically the pre-write compensation apparatus 10 as used to read and write. Most of the main features of the present invention are located in the delay circuitry 12. Once the write signal has been encoded, it is then variably delayed before being sent to the write amplifier 20. To illustrate the phenomenon of peak shift, an example will be provided herein as to how pre-write compensation without delay variation is utilised. This means that an arbitrary amount of pre-write compensation is to be imparted to any data pattern.

For this example, it will be assumed that the arbitrary amount of pre-write compensation to be imparted to any data pattern in the delay circuitry 12 is a negative delay of 2 nanoseconds. It will be understood that such delay can be either positive or negative. "Negative delay" means that the time interval for writing a given pair of ONES is decreased. "Positive delay" means that the time interval for writing is increased. A further assumption will be that a data pattern is to be sent from the drive interface 16 to the delay circuitry 12 (the delay circuitry 12 is assumed to be non-adaptable for purposes of this example only). The data pattern includes two logical ZEROS located between two logical ONES (1001). The time interval of each bit in 50 nanoseconds. Therefore, the logical ONE signals A and B are spaced 150 nanoseconds apart in time so that the delay circuitry 12 will receive the two signals A and B 150 nanoseconds apart. If no compensation is imparted to the signals A and B, these two signals will be written 150 nanoseconds apart in time on the disk 24. But since the delay circuitry 12 being non-adaptable automatically imparts 2 nanoseconds of negative delay, the logical ONE signals A and B will be written 148 nanoseconds apart. For illustrative purposes, it is further assumed that the peak shift between the logical ONE signals A and B would cause a positive delay of 6 nanoseconds whether no pre-write compensation whatsoever. This means that when the read channel is activated, the disk drive assembly 14 will detect the two flux transitions at a time interval of 154 nanoseconds, derived from the logical ONE signals A and B being written 148 nanoseconds apart (150 nanoseconds minus 2 nanoseconds imparted by the circuitry 12) plus the 6 nanoseconds delay due to peak shift. The signals generated in response to the logical ONE signals A and B will therefore be processed 154 nanoseconds apart, and will proceed along the read channel to the drive interface 16 appearing to have been written 154 nanoseconds apart, rather than the desired 150 nanoseconds, even though they were actually written 148 nanoseconds apart.

Such a writing and reading process will now be discussed in relation to the present invention wherein a variable pre-write delay value is imparted to the writing signal. Again, a data pattern is written into the system at the drive interface 16 and is sent to the delay circuitry 12 (once again, and from now on the delay circuitry 12 will considered to be adaptable to provide a variable delay). The signal is processed in the delay circuitry 12 and a selected pre-write delay value is determined based on the recording head 22, which will be used for writing the data, the writing location and the data pattern. That selected pre-write delay value is then applied to the data pattern. In this example, since the peak shift is 6 nanoseconds and the desired reading time interval is 150 nanoseconds, a 6 nanosecond negative delay value is applied, meaning that the logical ONE signals A and B are written 6 nanoseconds closer in time than if there were no peak shifts. Therefore, in the compensated data pattern produced by the delay circuitry 12, the logical ONE signals A and B are sent out at a time interval of 144 nanoseconds. The recording head 22 then receives the two signals 144 nanoseconds apart and writes them accordingly. During reading, the disk drive assembly 14 perceives the two logical ONE signals A and B to be 150 nanoseconds apart. They are processed in the signal processing circuitry 30 accordingly. When the data pattern is received back at the drive interface 16, the data pattern is read such that the logical ONE signals A and B are 150 nanoseconds apart, thus achieving the desired object of having the same time interval in the reading channel as in the writing channel prior to the signals entering the delay circuitry 12 of the present invention.

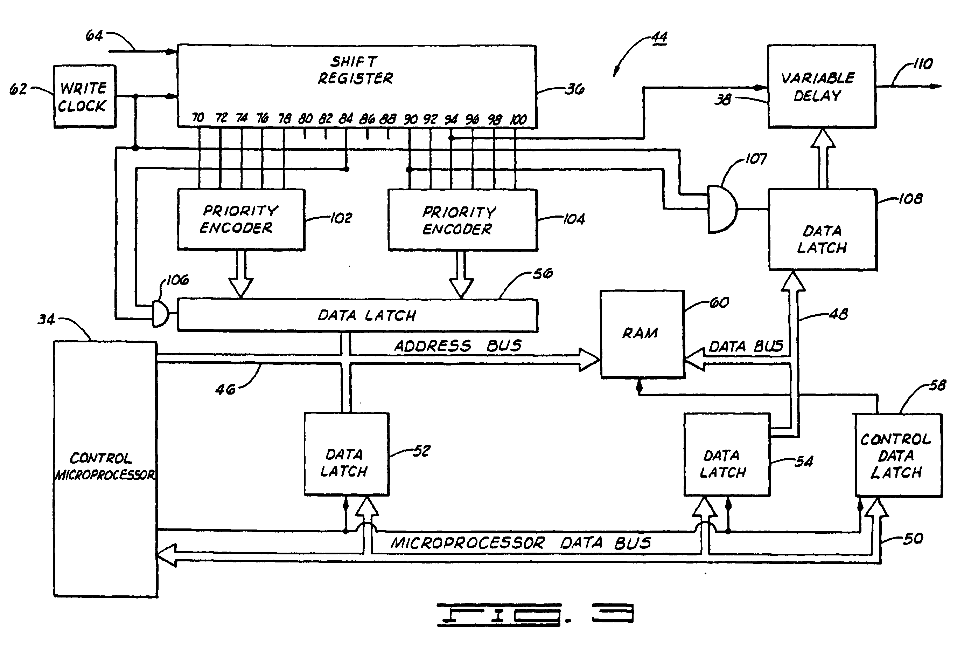

Referring to Figure 2, the delay circuitry 12 of the present invention is shown schematically in a block diagram. The data pattern is supplied to the disk drive interface 16 by supply means (not shown), which employ an encoder and a timing clock and into which the data may have been manually entered. The data pattern is encoded at the signal encoding block 18 and is transmitted in the form of pulse signals to the delay circuitry 12. The data pattern is received at a shift register 36 and is processed. The data pattern is sent from the shift register 36 to a variable delay 38. Simultaneously, the information concerning the data pattern is sent to a data storage element 40 where it is processed and a suitable pre-write delay value is determined. This information is sent to the variable delay 38 where the selected pre-write delay value is applied to the data pattern as it is received from the shift register 36 by controlling the circuit within the variable delay 38 so that the appropriate number of delay elements or taps act upon each pulse signal. The compensated data is then output by the variable delay 38 and proceeds along the write channel.

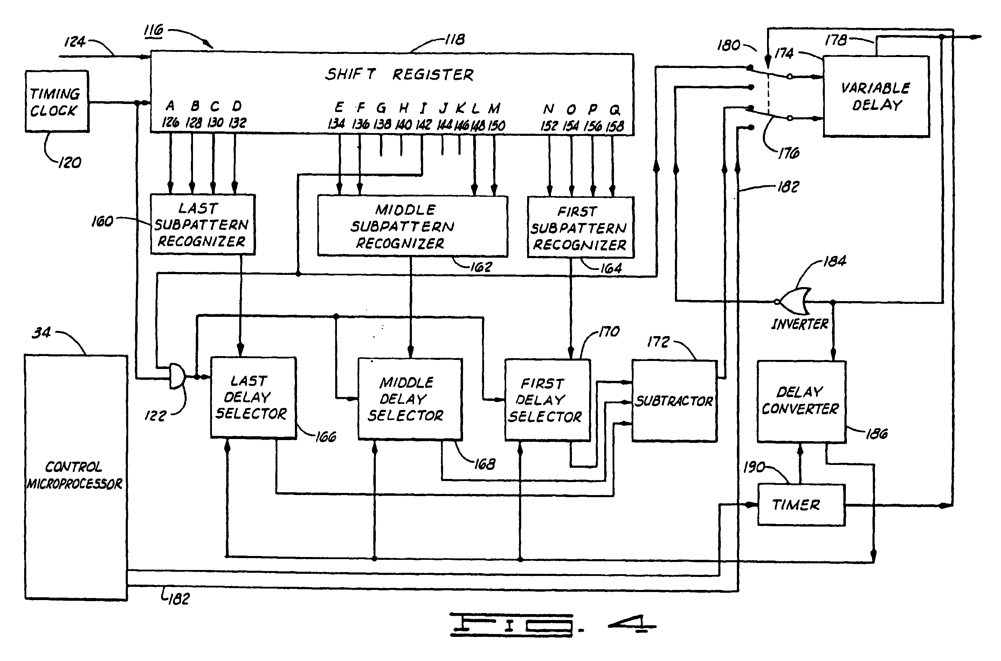

Referring to Figure 3, one embodiment of the delay circuitry 12 of the present invention is depicted by the general reference numeral 44. The circuitry 44 is again shown in block diagram form, and can be incorporated into a circuit board. However, for practical manufacturing purposes, the circuitry depicted would probably be incorporated into LSI circuitry.

All of the block components shown in Figure 3 are connected electronically wherever indicated by connecting lines, as is conventional in circuit diagrams. The delay circuitry 44 shown in Figure 3 comprises a first data bus 46 electronically connecting certain components of the circuitry, and a second data bus 48 electronically connecting other components of the circuitry. A data bus 50 from a control micro-processor 34 is provided for a startup mode and is referred to hereinbelow as the start up data bus. The circuitry 44 further comprises data latches 52, 54 and 56, a data latch 58, a static RAM 60, and a write clock 62. The control micro-processor 34 is connected to the data latches 52 and 54 and the control data latch 58. The control data latch 58 is connected to the static RAM 60, and to the data latches 52, 54 and 56.

An electronic input line 64 supplies the pulse signals representing the serial data pattern to the shift register 36, which has a number of flip-flops designated 70 to 98 (in even numbers). The shift register 36 is connected to a last priority encoder 102, and a first priority encoder 104, whose outputs are connected to the data latch 56. The data latch 56 is further connected to an output of an AND gate 106 and the data bus 46. The data bus 46 is, in turn, connected to the static RAM 60, the data latch 52 and the control micro-processor 34.

An AND gate 107, which is connected to an output of the shift register 36, is connected to another data latch 108. The variable delay 38 receives inputs from both the shift register 36 and the data latch 108 and has an output line 110 for sending compensated pulse signals to the write amplifier 20 (Figure 2).

As indicated above, the data pattern, in the context of this invention, is a sequence of bits and there is a one-to-one correspondence between the total number of bits in the sequence and the total number of flip-flops in the shift register 36. For example, in the circuit depicted in Figure 3, the data pattern has 15 bits because the shift register 36 has 15 flip-flops designated by the numbers 70 to 98. A sub-pattern, to be mentioned below, is a sub-set of the data pattern. In the circuit of Figure 3, each data pattern effectively has two sub-patterns; (1) a last sub-pattern; and (2) a first sub-pattern. The last sub-pattern constitutes the bits located at the flip-flops 70 to 84, and the first sub-pattern constitutes the bits located at the flip-flops 84 to 98.

Once the delay circuitry 44 has been constructed, the respective pre-write delay values are determined experimentally. The first thing that is determined is what code will be used for the circuitry, e.g. 2, 7 code in the present instance. Once that has been established, the number of code permutations that can appear in the shift register 36 can be computed. If practicable, testing for each data pattern or data sub-pattern permutation is then undertaken individually. If such testing is not practicable, another technique described below is used to determine stereo-typical data patterns.

This technique is employed in the circuitry of Figure 3, this being the function of the priority encoding system. Only the closest logical ONE to a central logical ONE is considered by each encoder. Hence, if a sub-pattern exists where a first logical ONE occurs 3 bits away from the centre and another logical ONE occurs 6 bits away so that the sequence would be 01001001 this will be considered to be the same as the sequence 00001001 (the last ONE being the central logical ONE in each case). Using the stereo-typical data pattern method, the two data sub-patterns would be treated identically in terms of the compensating delay value. The delay value for the pattern 00001001 would be determined experimentally and any other pattern falling within that mode would be assumed to require the same amount of compensation. Once the stereo-typical data patterns are determined, then testing is done for each stereo-typical data pattern with each head and each writing zone. The amount of peak shift for each permutation is determined by reading and writing. Each disk is divided up into writing zones by marking writing zone boundaries. For tracks falling within a given writing zone, the value of the compensation to be used may be interpolated in a linear fashion.

Thus, write delay values based on head, writing location and data pattern are pre-determined by writing a data pattern or sub-pattern, or corresponding stereo-typical pattern or sub-pattern, at a given head and writing location, reading back the pattern or sub-pattern, and noting a time shift occurring between the logical ONES in the pattern or sub-pattern. The time shift is recorded and serves to provide a corresponding write delay value. The process is repeated for each possible pattern or sub-pattern.

Once all of the delay values have been experimentally measured, the values are recorded on a disk of the disk drive assembly so that each permutation of stereo-typical data pattern, head, and writing zone boundary has a particular delay value associated with it. Each one of these delay values is given an address and written on the disk for down loading use at each power-up sequence.

In operation, the delay circuitry 44 depicted in Figure 3 has two modes; a start-up mode and a functional mode. The start-up mode is utilised when the pre-write compensation apparatus 10 is experiencing a power-up. At that time, the control micro-processor 34 will send a signal to begin the start-up mode. The control micro-processor 34 sends an address signal to the first data latch 52, data to the second data latch 54, and a control signal to the control data latch 58. The control data latch 58 then sends an enabling signal to the first data latch 52 and a disabling signal to the third data latch 56 and the fourth data latch 108. The enabling signal allows the first data latch 52 to access the data bus 46 while the disabling signal prevents access to the data bus 46 by the third data latch 56. These signals are maintained as long as the circuitry is in the start-up mode, so that the second data latch 54 can input data into the static RAM 60.

The control micro-processor 34 then sends an address through the first data latch 52 to the static RAM 60. All of the delay values and corresponding addresses are retrieved from the disk 24 (Figure 1), loaded into the control micro-processor 34 and then loaded into the static RAM 60. The delay values for all permutations are down loaded from the disk 24 through the micro-processor 34 into the static RAM 60 via the data latch 54 and the second data bus 48. The address for a given delay value is input through the first data latch 52 into the RAM 60 via the data bus 46. Once all of these pre-determined data and addresses have been down loaded, the start-up sequence is complete. The delay values are down loaded into flip-flops in the memory matrix of the static RAM 60.

Once the start-up sequence has been completed, a disabling signal is sent to the first data latch 52, and an enabling signal is simultaneously sent to the data latch 56 and the data latch 108. The functional mode then becomes operative.

In the functional mode, the serial data pattern is input into the shift register 36 through the line 64. The write clock 62 controls the period of the delay circuitry 44. The write clock pulse is transmitted to the shift register 36. Once a given bit is input into the shift register 36, it is sent to the first flip-flop 70. Simultaneously, the bit which was stored at the flip-flop 70 goes to the flip-flop 72, the bit which was at the flip-flop 72 goes to the flip-flop 74, and so forth. The final bit located at the flip-flop 100 of the shift register 36 is lost. The central bit is located at the flip-flop 84 of the shift register 36. If there is a logical ONE at the flip-flop 84 of the shift register 36, at a given time, the delay circuitry 44 computes a delay value. If there is a logical ZERO at the flip-flop 84, the delay circuitry 44 performs no computation for that data pattern. When a logical ONE is input into the flip-flop 84 of the shift register 36, the flip-flop 84 sends a logical ONE signal to activate the data latch 56 to perform the operation for which the present invention is designed.

Simultaneously with the arrival of a logical ONE at the flip-flop 84, any logical ONES located at the flip-flops 70 to 78 go to the last priority encoder 102. There can be no logical ONES at the flip-flops 80 or 82 because of the rules for the 2, 7 encode. Also, signals are simultaneously sent from the flip-flops 90 to 98 to the first priority encoder 104. Likewise, the flip-flops 86 and 88 can have no logical ONES located there when a logical ONE is located at the flip-flop 84 because of the 2, 7 code rules. The last priority encoder 102 determines the closest logical ONE to the central logical ONE, and generates a corresponding 3 bit output. In other words, if there is a logical ONE at the flip-flop 78, the last priority encoder 102 quits it search and employs a stereo-typical data pattern for 00001001. If it does not find a logical one at the flip-flop 78, it looks for one at flip-flop 76, and so forth through to the flip-flop 70. If there is no logical ONE located at any of these flip-flops, it is assumed that this is a maximum spacing for the 2,7 code i.e. 10000001. Likewise the first priority encoder 104 generates a 3 bit output indicating the closest logical ONE to the central logical ONE, looking first at the flip-flop 90 for a logical ONE closest to the central logical ONE. If it finds one there, it employs the stereo-typical data sub-pattern 10010000. If a logical ONE is not found at the flip-flop 92, sequentially the first priority encoder 104 looks at the flip-flops 92 to 98.

As that particular data sub-pattern moves down the series of flip-flops, two things happen. First, when the central logical ONE for the data pattern in question moves three flip-flops, i.e. three periods later, that signal is not only passed from the flip-flop 88 to the flip-flop 90 but also from the flip-flop 90 to the data latch 108 through the gate 107 as a timing signal so that a write delay value is received from the RAM 60 and latched into the data latch 108.

When the same signal arrives at the flip-flop 94, i.e. when another two periods have transpired, that signal is not only passed onto the flip-flop 96 but also to the variable delay 38 where that signal is operated on such that it is compensated according to the appropriate delay value which has been latched into the data latch 108.

The delay value is selected as follows: the particular stereo-typical data sub-patterns above of the last priority encoder 102 and the first priority encoder 104 are sent to the data latch 56, where the last stereo-typical data sub-pattern is combined with the first stereo-typical data sub-pattern to give a complete stereo-typical data pattern. This complete data pattern is sent to the static RAM 60 where the address of this complete pattern is accessed in combination with the head and writing zones sent from the control micro-processor 34. When the complete address is determined, the delay value for that unique permutation is accessed and that delay value is sent to the delay latch 108, as mentioned above, where it controls the amount of delay required for the adjustment so that an appropriate number of delay elements or steps are activated in the delay 38 for delaying the signals supplied from the flip-flop 94 to the line 110 for compensated data.

The delay circuitry 44 continues to process logical ONES in the same fashion, each logical ONE arriving at the shift register 36 and becoming the central logical ONE for a given pattern, in turn, and then eventually arriving at the flip-flop 94 where the signal for the logical ONE is sent to the variable delay where it is operated on with the appropriate delay value.

The connections between the shift register 36, the variable delay 38 and the data latch 108 are chosen so that the circuit timing requirements of the RAM 60 and the data latches are satisfied. The actual connections may change if faster or slower circuitry is used.

Referring now to Figure 4, another embodiment of the circuitry 12 of the present invention is depicted by the general reference numeral 116. It will be understood that the delay circuitry 116 is an alternative to the delay circuitry 44 for use as the delay circuitry 12 in Figure 2.

The delay circuitry 116 comprises a shift register 118, a timing clock 120, an AND gate 122, and an input line 124. The timing clock 120 is connected to the AND gate 122 and the shift register 118. The line 124 supplies a serial data pattern to the shift register 118, which incorporates flip-flops 126 to 158. The shift register 118 is connected to a last sub-pattern recogniser 160, a middle sub-pattern recogniser 162, and a first sub-pattern recogniser 164.

Again, the data pattern is a sequence of bits such that there is a one to one correspondence between the total number of bits in the sequence and the total number of flip-flops in the shift register 118. In the circuit depicted in Figure 4, that data pattern has 17 bits because the shift register 118 has 17 flip-flops designated by the numbers 126 to 158.

The data pattern associated with the shift register 118 is changed with every pulse of the timing clock 120. This is illustrated in Table 1 below where four different data patterns are shown corresponding to four times t=1, t=2, t=3, t=4, where the unit of time is the pulse period of the shift register (t=4A corresponds to the same data pattern as t=4, as will be discussed below). The flip-flops of the shift register 118 are denominated by the letters A to Q in Table 1 corresponding to the numbers 126 to 158. For example, A represents the flip-flop 126, B represents the flip-flop 128, C represents the flip-flop 130 and so forth. The letters are used in place of the appropriate numbers merely for ease of display in Table 1, and the four data patterns shown are exemplary in nature and have no special significance.

**TABLE 1**

| Data Pattern Shift Register 118 | | | | | | | | | | | | | | | | | |
|---|---|---|---|---|---|---|---|---|---|---|---|---|---|---|---|---|---|
| | A | B | C | D | E | F | G | H | I | J | K | L | M | N | O | P | Q |
| t=1 | 0 | 0 | 1 | 0 | 0 | 1 | 0 | 0 | 1 | 0 | 0 | 0 | 1 | 0 | 0 | 0 | 1 |
| t=2 | X | 0 | 0 | 1 | 0 | 0 | 1 | 0 | 0 | 1 | 0 | 0 | 0 | 1 | 0 | 0 | 0 |
| t=3 | X | X | 0 | 0 | 1 | 0 | 0 | 1 | 0 | 0 | 1 | 0 | 0 | 0 | 1 | 0 | 0 |
| t=4 | X | X | X | 0 | 0 | 1 | 0 | 0 | 1 | 0 | 0 | 1 | 0 | 0 | 0 | 1 | 0 |
| t=4A | 0 | 0 | 0 | 0 | 0 | 1 | 0 | 0 | 1 | 0 | 0 | 1 | 0 | 0 | 0 | 1 | 0 |

The first data pattern listed on Table 1 is 00100100100010001, residing in the shift register 118 at arbitrary time, t=1. After the pulse period has elapsed (a typical frequency for such a circuit would be 50 MHZ, hence a period of 20 nanoseconds), the shift register 118 receives a pulse signal via the timing clock 120. At that time, each bit shifts one flip-flop to the right to yield a second data pattern X0010010010001000 at the time t=2. The bit associated with the flip-flop A is denominated "X" to remind the reader that this is a new bit, not present in the data pattern at the time t=1. The same process occurs at the times t=3 and t=4. The data pattern shown on the line for the time t=4A is the same data pattern shown on the line for the time t=4, but shows explicitly the value of the three latest bits. The value of all three bits in this case happens to be ZERO.

**TABLE 2**

| Data Pattern Shift Register 118 | | | | | | | | | | | | | | | | | |
|---|---|---|---|---|---|---|---|---|---|---|---|---|---|---|---|---|---|
| | LAST | | | | Middle | | | | | | | | | First | | | |
| | A | B | C | D | E | F | G | H | I | J | K | L | M | N | O | P | Q |
| t=1 | 0 | 0 | 1 | 0 | 0 | 1 | 0 | 0 | 1 | 0 | 0 | 0 | 1 | 0 | 0 | 0 | 1 |

As stated, a sub-pattern is a sub-set of the data pattern. In the circuit of Figure 4 and shown in Table 2 above, each data pattern has three sub-patterns: (1) a last sub-pattern; (2) a middle sub-pattern; (3) a first subpattern. The last sub-pattern is made sequentially of the four bits located at the flip-flops A to D in Table 2; the middle sub-pattern is made sequentially of the nine bits located at the flip-flops E to M; and the first sub-pattern is made sequentially of the bits located at the flip-flops M to Q.

Referring again to Table 1, the central bit in each data pattern is the one at the flip-flop I. The purpose of the delay circuitry 116 in Figure 4 is to provide a variable delay for (compensate) the bit at the flip-flop I (the flip-flop 142) if it is a logical ONE. If the bit at the flip-flop I (142) is a logical ZERO, no compensation is performed. In the example of Table 1, the delay circuitry 116 will delay the bit at the flip-flop I when the time t=1, and the time t=4, and will perform no delay when the time t=2 and the time t=3.

In Table 2, the three sub-patterns are delineated for the data pattern 00100100100010001 at the time t=1. The last sub-pattern is 0010; the middle sub-pattern is 010010001; and the first sub-pattern is 0001. Since, by definition in the present instance the data pattern is of interest only if there is a logical ONE at the flip-flop I, and the circuit of Figure 4 is also designed to use the 2,7 code, data patterns of interest will have middle sub-patterns with a XX00100XX configuration (i.e. logical ZEROS at the flip-flops G, H, J, and K and a logical ONE at the flip-flop I). Hence, the flip-flops E, F, L, and M in a given middle sub-pattern may have either a logical ONE or a logical ZERO.

**TABLE 3**

| | Last | | | |
|---|---|---|---|---|
| | A | B | C | D |
| NEXT 8T | 1 | 0 | 0 | 0 |
| NEXT 7T | 0 | 1 | 0 | 0 |
| NEXT 6T | 0 | 0 | 1 | 0 |
| NEXT 5T | 0 | 0 | 0 | 1 |
| COMBINATIONS | 1 | 0 | 0 | 1 |

Table 3 illustrates the possible permutations for the last sub-pattern and the name for each such permutation. It will be understood that if a larger shift register were used, and hence there were more bits in the last sub-pattern, there would be more permutations containing two or more logical ONES, but in this circuit only one such permutation is possible in the 2, 7 code for the last and first sub-patterns.

**TABLE 4**

| | Middle | | | | | | | | |
|---|---|---|---|---|---|---|---|---|---|
| | E | F | G | H | I | J | K | L | M |
| NEXT 4T only | 1 | 0 | 0 | 0 | 1 | 0 | 0 | 0 | 0 |
| NEXT 3T only | 0 | 1 | 0 | 0 | 1 | 0 | 0 | 0 | 0 |
| PREV 4T only | 0 | 0 | 0 | 0 | 1 | 0 | 0 | 0 | 1 |
| PREV 3T only | 0 | 0 | 0 | 0 | 1 | 0 | 0 | 1 | 0 |
| NEXT 3T, PREV 3T | 0 | 1 | 0 | 0 | 1 | 0 | 0 | 1 | 0 |
| NEXT 3T, PREV 4T | 0 | 1 | 0 | 0 | 1 | 0 | 0 | 0 | 1 |
| NEXT 4T, PREV 3T | 1 | 0 | 0 | 0 | 1 | 0 | 0 | 1 | 0 |
| NEXT 4T, PREV 4T | 1 | 0 | 0 | 0 | 1 | 0 | 0 | 0 | 1 |
| NONE | 0 | 0 | 0 | 0 | 1 | 0 | 0 | 0 | 0 |

Table 4 illustrates the possible permutations for the middle sub-pattern and the name of each. "NEXT 4T only' identifies the middle sub-pattern permutation having a logical ONE at the flip-flop E, four bits later in time from the central bit of the flip-flop I, the central bit being the only other logical ONE in this permutation. "NEXT 3T, PREV 3T" identifies the middle sub-pattern permutation having logical ONES only at the flip-flops F, I and L. The bit at the flip-flop F is three bits later in time than the central bit at the flip-flop I, and the bit at the flip-flop L is three bits previous in time to the central bit.

**TABLE 5**

| | First | | | |
|---|---|---|---|---|
| | N | O | P | Q |
| PREV 5T | 1 | 0 | 0 | 0 |
| PREV 6T | 0 | 1 | 0 | 0 |
| PREV 7T | 0 | 0 | 1 | 0 |
| PREV 8T | 0 | 0 | 0 | 1 |
| COMBINATIONS | 1 | 0 | 0 | 1 |

Table 5 illustrates the possible permutations for the first sub-pattern and the name of each. "PREV 5T" means previous 5T and identifies the first sub-pattern permutation having a logical ONE at the flip-flop N, five bits prior in time to the central bit at the flip-flop I.

From the foregoing, it will be clear that the data pattern for the time t=1 in Table 1 (00100100100010001) can be described as having a NEXT 6T last sub-pattern (0010 in Table 3); a NEXT 3T, PREV 4T middle sub-pattern (010010001 in Table 4); and a PREV 8T first sub-pattern (0001 in Table 5).

Referring again to Figure 4, the last sub-pattern recogniser 160 is connected to a last delay selector 166, which can select a delay sub-value corresponding to the appropriate last sub-pattern permutation (each sub-pattern permutation has a delay value associated with it). The last delay selector 160 has a delay step for each last sub-pattern permutation, where the appropriate delay sub-value is stored. NEXT 8T is the site where the delay sub-value is stored corresponding to a NEXT 8T last sub-pattern, as depicted in Table 3.

Similarily, the middle sub-pattern recogniser 162 is connected to a middle delay selector 168, which has a delay step corresponding to each permutation shown in Table 4, where appropriate delay sub-values are situated. A delay step near the middle of a variable delay 174 should be used for the NONE middle sub-pattern to act as a standard or default delay step.

The first sub-pattern recogniser 164 is likewise connected to a first delay selector 170. The first delay selector 170 has delay steps corresponding to the permutations shown in Table 5.

Codes other than 2, 7 code may be used by modifying the patterns of Table 3, 4 and 5. Connection of the shift register 118 to the sub-pattern recognisers 160, 162 and 164 may also need changes.

The delay selectors 166, 168 and 170 are connected to a subtractor 172. The subtractor 172 is connected to the variable delay 174 through a first variable delay input switch 176. The variable delay 174 is connected to an output 178, which carries a compensated data pattern out of the delay circuitry 116. The variable delay 174 is also connected to the central flip-flop 142 of the shift register 118 via a second variable delay input switch 180. The variable delay 174 is further connected via a maximum delay input line 182 to the control micro-processor 34 for inputting a maximum delay step signal to the variable delay 174 through the first variable delay input switch 176. The variable delay 174 is also connected to an inverter 184 and a delay converter 186. The delay converter 186 is connected to the last delay selector 166, the middle delay selector 168, and the first delay selector 170. A timer 190 is connected between the control micro-processor 34 and the delay converter 186.

The delay circuitry of 116 of Figure 4 employs a technique known as effect isolation. By contrast with the delay circuitry 44 in Figure 3, in delay circuitry 116, once the data patterns are broken down into sub-patterns, delay sub-values for the sub-patterns are calculated independently. In other words, when a logical ONE is located at the flip-flop 152 in the shift register 118, delay sub-values are determined for the last sub-pattern, the middle sub-pattern and the first sub-pattern. In effect isolation, the last sub-pattern, described by the flip-flops 126 to 132, is assumed to be isolated from and not affected by the other sub-patterns. The number of bits in the respective sub-patterns is chosen in order to maximise the accuracy of this assumption. In this system, then, a sub-value must be determined for the last sub-pattern recogniser 160, the middle sub-pattern recogniser 162, and the first sub-pattern recogniser 164. Each sub-pattern recogniser is not priority encoded but rather considers the bit at each flip-flop. For example, in the last sub-pattern recogniser 160 there could be a 5T, 8T combination sub-pattern or a 5T sub-pattern or a 6T sub-pattern or a 7T sub-pattern or an 8T sub-pattern. This is also the case for the first sub-pattern recogniser 164. Each one of those sub-patterns would have a distinct sub-value, which would be selected at the delay selectors 164, 168 and 170, respectively. The three individual sub-values would then be processed at the subtractor 172 to give a delay value for compensating the central bit when it was written.

Each permutation for each sub-pattern is tested experimentally with each writing location and the head appropriate to the location in the manner described in relation to Figure 3. The writing locations are divided into writing zones by means of radial zone boundaries. For example, a disk might have five writing zones on each side with 100 or more tracks between any two zone boundaries. The sub-values will be linearly interpolated based on the two closest zone boundaries. All of these sub-values for each permutation are stored on the disk 24 of the disk drive assembly 14.

In certain cases, the variable delay 174 may be implemented with delay step elements that may change the delay greatly over circuit temperature and voltage. Thus, the absolute delay needed for each sub-pattern permutation must be converted to the proper number of delay steps to obtain the proper delay during writing. This is done in a conversion mode during micro-processor down load of the delay sub-values for each sub-pattern. The conversion mode, as described hereinbelow should be utilised frequently in order to correct the delay sub-values for changes in track, circuit temperature and voltage.

When a particular track is selected for writing, the control micro-processor 34 puts the delay circuitry 116 into the conversion mode by sending absolute delay values for each sub-pattern to the delay circuitry 116. The delay control switch 176 is switched from the subtractor 172 to a processor controlled fixed number of delay steps. The undelayed input switch 180 is switched to delay the output of the inverter 184. At this point, a ring oscillator is effectively formed by the inverter 184 and the variable delay 174. The frequency of the oscillator is: the inverse of two times the total propagation delay of the delay step elements selected in the variable delay 174. This is because each delay step element must propagate low then high once for each oscillation period. The correction for delay changes over temperature and voltage can then be obtained from the frequency of the ring oscillator.

The absolute delay value is sent to the timer 190, which performs a time out proportional to the desired delay value. During this time out, the oscillations from the ring oscillator 174/184 are counted by the delay converter 186. Thus, the number of delay steps needed to perform a particular delay can be counted during this time out.

Each converted sub-value is then sent back to the appropriate delay selector where it is ready for use in the delay process. This converted sub-value will be correct as long as the above mentioned factors are not changed. The conversion mode is done on the fly. Most often this conversion mode will be used when a new track is being accessed. This conversion mode is completed for each delay step for each delay selector (i.e. for each permutation of each sub-pattern) by the time the new track is accessed.

The final mode, the operational mode, is the one in which data is actually compensated before being recorded on the disk medium. Initially, the serial data pattern is input into the shift register 118. The write clock 120 provides the period, usually in the range of about 50 nanoseconds, i.e. one bit is transferred every 50 nanoseconds. The bits are received sequentially into the data shift register 118 at the initial flip-flop 126 and are then transferred down the line from the flip-flop 126 to the flip-flop 128, from the flip-flop 128 to the flip-flop 130 and so on until the first bit of the data pattern reaches the flip-flop 158. When another pulse from the write clock 120 is given, that particular bit (the first one in the data pattern) at the flip-flop 158 is lost.

The write clock 120 also gives timing pulses to each of the delay selectors as they receive sub-patterns sent to them by the sub-pattern recognisers. Whenever there is a logical ONE at the flip-flop 142, i.e. there is a central logical ONE, the clock enable gate 122 will allow each sub-pattern selector 166, 168, 170 to select the proper delay for the sub-patterns recognised at the sub-pattern recogniser 160, 162 and 164. The names for these sub-pattern recognisers result from the fact that the first sub-pattern recogniser 164 uses the data bits which have been in the shift register 118 the longest, i.e. they were the first data bits to enter the shift register 118. In particular, the bit of the flip-flop 158 is the first of all the data bits to enter the shift register 118. Likewise, the bit of the flip-flop 156 is the first after the flip-flop 158 to have entered the shift register 118. So the last data bit to have entered the shift register 118 is the one at the flip-flop 126. This sequence is constantly changing as the data bits move sequentially to the right one flip-flop per pulse of the write clock 120. Logical ONE bits result in signals to the sub-pattern recognisers at any time that there is a central logical ONE. For example, say there is a central logical ONE at the flip-flop 142. Further, say that there is a logical ONE at the flip-flop 126, a logical ZERO at the flip-flop 128, the flip-flop 130 and the flip-flop 132. The flip-flop 126 would send a high signal, i.e. a relative voltage of 5 volts to the last sub-pattern recogniser 160. The last sub-pattern recogniser 160 receiving no high signals from the flip-flop 128, or the flip-flop 130, or the flip-flop 132 would then evaluate the sub-pattern as being a 1000 sub-pattern. It would then send a signal to that effect to the last delay selector 166. The last delay selector 166 would then access the converted delay step for 8T and would send the converted sub-value (obtained during the conversion mode) to the subtractor 172. In the same fashion, the middle sub-pattern recogniser 162 and the first sub-pattern recogniser 164 would also send signals to the middle delay selector 168 and the first delay selector 170 respectively. Each of the delay selectors would then send corrected delay sub-values to the respective inputs at the subtractor 172.

The subtractor 172 then takes those three values, the value at its middle input having an absolute positive delay sub-value, the values at the last input and the first input thereof having either algebraic sign. The total sum is given by the formula: the absolute value of the middle input minus the value of the last input minus the value of the first input so that a total delay value is determined. The subtractor 172 then sends this to the variable delay 174 describing how many delay steps are to be employed on the bit associated with this delay value. The variable delay 174 receives a signal indicating the presence of the central logical ONE at the flip-flop 142 through the variable delay input switch 180. This allows a certain amount of time for the delay value to be computed. Before the variable delay 174 receives this signal, the variable delay 174 forms the appropriate number of delay steps so that the data signal is compensated appropriately. The compensated data bit is sent out from the variable delay 174 via the output line 178 to other components of the disk drive assembly 14. Each logical ONE bit is processed by the delay circuitry 12 in this fashion.

To implement the delay circuitry 116 with slow logic, it may be necessary to modify the last sub-pattern recogniser 160, the last delay selector 166 and the subtractor 172 so that two final delay values are calculated in the subtractor 172 to correct either state of the flip-flop 126 before it is known. Once this bit does enter the shift register 118 at the flip-flop 126, one of the two values calculated can be selected in a MUX (not shown) placed between the subtractor 172 and the variable delay 174 so as to choose the appropriate value based on the bit at the flip-flop 126. This is an effective way to design the circuit, but the embodiment depicted in Figure 4 is used herein for illustrative purposes as such is easier to explain and comprehend.

## Claims

1. A method of writing a serial data pattern in the form of flux transitions on a magnetic medium (24), the method comprising:
receiving a serial data pattern from a data supply means (16);
obtaining a write delay value, said delay value being dependent upon a writing head (22), writing location on the magnetic medium and the data pattern to be written;
analysing said data pattern to identify a flux change;
analysing the data pattern both preceding and following the flux change to derive a stereo typical data pattern;
retrieving said write delay value from a delay store (4) which relates to the stereo typical data pattern;
writing the data pattern with the write delay value, and **characterised by**:
analysing the data pattern both preceding and following the flux change to determine data sub-patterns, and combining the data sub-patterns to derive the stereo typical data pattern.

2. A method of writing a serial data pattern in the form of flux transitions on a magnetic medium (24), the method comprising:
receiving a serial data pattern from a data supply means (16);
obtaining a write delay value, said delay value being dependent upon a writing head (22), writing location on the magnetic medium and the data pattern to be written;
writing the data pattern with the write delay value, and prior to writing the data pattern;
analysing said data pattern to identify a flux change; **characterised by**
analysing the data pattern both preceding and following the flux change to determine data sub-patterns;
retrieving a partial write delay value from a delay store for each data sub-pattern; and
combining the partial write delay value to obtain the write delay value.

3. A serial data pattern writing method as claimed in claim 1 or 2, comprising dividing the magnetic medium into a plurality of writing zones and determining the writing location according to the situation of the writing location within a respective one of the writing zones.

4. A serial data pattern writing method as claimed in any one of the preceding claims, in which the delay values are determined by:
(1) writing the data pattern using the given head at the given writing location;
(2) reading the written data pattern;
(3) detecting any time shift between logical ONES in the read data pattern;
(4) storing the time shift as a write delay value for the given head at the given writing location and the data pattern; and
(5) repeating steps (1) to (4) for each possible data pattern.

5. A serial data pattern writing method as claimed in any one of the preceding claims, further comprising correcting the optimum delay value to compensate for temperature and voltage changes.

6. An apparatus for writing a serial data pattern in the form of flux transitions on a magnetic medium (24), the apparatus comprising:
data supply means (16) for providing a serial data pattern;
recording means (20,22) having a head (22) for writing the data pattern on the magnetic medium;
delay storage (26,40,60,166,168,170) for storing a number of write delay values which are dependant upon the head, the writing location on the magnetic medium and the data pattern;
means (12) for analysing said data pattern to identify a flux change and analysing the data pattern both preceding and following the flux change to determine data sub-patterns and for combining the data sub-patterns to derive a stereo typical data pattern and retrieving said write delay value from said delay storage which relates to the stereo typical data pattern.

7. An apparatus for writing a serial data pattern in the form of flux transitions on a magnetic medium (24), the apparatus comprising:
data supply means (16) for providing a serial data pattern;
recording means (20,22) having a head (22) for writing the data pattern on the magnetic medium;
delay storage (26,40,60,166,168,170) for storing a number of partial write delay values which are dependant upon the head, the writing location on the magnetic medium and the data pattern;
means (12) for analysing said data pattern to identify a flux change and analysing the data pattern both preceding and following the flux change to determine data sub-patterns and for retrieving a partial write delay value from said delay store for each data sub-pattern and for combining the partial write delay value to obtain the write delay value.

8. A serial data pattern writing apparatus as claimed in claim 6 or 7, in which said delay circuitry includes a shift register (36,118) for receiving the data pattern.

9. A serial data pattern writing apparatus as claimed in any one of claims 6 to 8, in which said delay circuitry further comprises means (184,186,190) for correcting the write delay value to compensate for temperature and voltage changes.

10. A serial data pattern writing apparatus as claimed in claim 9, in which said correcting means comprises:
an inverter (184) arranged to receive the write delay value;
timing means (190) for switching to the output of the inverter for a set time so as to form a ring oscillator having a set period; and
a delay converter (186) coupled between the ring oscillator and the timing means (190) for counting the set periods and for calculating a correction value for the write delay value depending upon the number of set periods during the set time.

## Patentansprüche

1. Verfahren zum Schreiben eines seriellen Datenmusters in Form von Flußwechseln auf einem magnetischen Medium (24), wobei das Verfahren folgende Schritte umfaßt:
Empfangen eines seriellen Datenmusters von einer Datenzuführungseinrichtung (16);
Gewinnen eines Schreib-Verzögerungswertes, wobei der Verzögerungswert von einem Schreibkopf (22), einer Schreibposition auf dem magnetischen Medium und dem zu schreibenden Datenmuster abhängt;
Analysieren des Datenmusters zum Identifizieren einer Flußänderung;
Analysieren sowohl des der Flußänderung vorhergehenden als auch des dieser nachfolgenden Datenmusters zur Ableitung eines stereotypischen Datenmusters;
Rückgewinnen des Schreibverzögerungswertes aus einem Verzögerungsspeicher (4), der sich auf das stereotypische Datenmuster bezieht;
Schreiben des Datenmusters mit dem Schreib-Verzögerungswert; und
**gekennzeichnet durch**:
Analysieren sowohl des der Flußänderung vorhergehenden als auch des dieser nachfolgenden Datenmusters zur Bestimmung von Daten-Teilmustern, und Kombinieren der Daten-Teilmuster zur Ableitung des stereotypischen Datenmusters.

2. Verfahren zum Schreiben eines seriellen Datenmusters in Form von Flußwechseln auf einem magnetischen Medium (24), wobei das Verfahren folgende Schritte umfaßt:
Empfangen eines seriellen Datenmusters von einer Datenzuführungseinrichtung (16);
Gewinnen eines Schreib-Verzögerungswertes, wobei der Verzögerungswert von einem Schreibkopf (22), einer Schreibposition auf dem magnetischen Medium und dem zu schreibenden Datenmuster abhängt;
Schreiben des Datenmusters mit dem Schreibverzögerungswert, und, vor dem Schreiben des Datenmusters, Analysieren des Datenmusters zum Identifizieren einer Flußänderung;
**gekennzeichnet durch**:
Analysieren sowohl des der Flußänderung vorhergehenden als auch des dieser nachfolgenden Datenmusters zur Bestimmung von Daten-Teilmustern,
Rückgewinnen eines Teil-Schreibverzögerungswertes aus einem Verzögerungsspeicher (4) für jedes Datenmuster; und
Kombinieren des Teil-Schreibverzögerungswertes zum Gewinnen eines Schreibverzögerungswertes.

3. Verfahren zum Schreiben serieller Daten nach Anspruch 1 oder 2, das die Unterteilung des magnetischen Mediums in eine Vielzahl von Schreibzonen und die Bestimmung der Schreibposition entsprechend der Lage der Schreibposition in einer jeweiligen der Schreibzonen umfaßt.

4. Verfahren zum Schreiben eines seriellen Datenmusters nach einem der vorhergehenden Ansprüche, bei dem die Verzögerungswerte dadurch bestimmt werden, daß:
(1) das Datenmuster unter Verwendung des vorgegebenen Kopfes an der vorgegebenen Schreibposition geschrieben wird,
(2) das geschriebene Datenmuster gelesen wird,
(3) irgendeine Zeitverschiebung zwischen den logischen EINS-Werten in dem gelesenen Datenmuster festgestellt wird,
(4) die Zeitverschiebung als ein Schreibverzögerungswert für den vorgegebenen Kopf an der vorgegebenen Schreibposition und das Datenmuster gespeichert wird, und
(5) die Schritte (1) bis (4) für jedes mögliche Datenmuster wiederholt werden.

5. Verfahren zum Schreiben eines seriellen Datenmuster nach einem der vorhergehenden Ansprüche, das weiterhin die Korrektur des optimalen Verzögerungswertes zur Kompensation von Temperatur- und Spannungsänderungen umfaßt.

6. Vorrichtung zum Schreiben eines seriellen Datenmusters in Form von Flußwechseln auf einem magnetischen Medium (24), wobei die Vorrichtung folgende Teile umfaßt:
Datenzuführungseinrichtungen (16) zur Lieferung eines seriellen Datenmusters;
Aufzeichnungseinrichtungen (20, 22) mit einem Kopf (22) zum Schreiben des Datenmusters auf das magnetische Medium;
einen Verzögerungsspeicher (26, 40, 60, 166, 168, 170) zum Speichern einer Anzahl von Schreibverzögerungswerten, die von dem Kopf, der Schreibposition auf dem magnetischen Medium und dem Datenmuster abhängen;
Einrichtungen (12) zum Analysieren des Datenmusters zur Identifikation einr Flußänderung und zum Analysieren sowohl des der Flußänderung vorhergehenden als auch des dieser nachfolgenden Datenmusters zur Bestimmung von Daten-Teilmustern und zum Kombinieren der Daten-Teilmuster zur Ableitung eines stereotypischen Datenmusters und zum Rückgewinnen des Schreibverzögerungswertes aus dem Verzögerungsspeicher, der auf das stereotypische Datenmuster bezogen ist.

7. Vorrichtung zum Schreiben eines seriellen Datenmusters in Form von Flußwechseln auf einem magnetischen Medium (24), wobei die Vorrichtung folgende Teile umfaßt:
Datenzuführungseinrichtungen (16) zur Lieferung eines seriellen Datenmusters;
Aufzeichnungseinrichtungen (20, 22) mit einem Kopf (22) zum Schreiben des Datenmusters auf das magnetische Medium;
einen Verzögerungsspeicher (26, 40, 60, 166, 168, 170) zum Speichern einer Anzahl von Teil-Schreibverzögerungswerten, die von dem Kopf, der Schreibposition auf dem magnetischen Medium und dem Datenmuster abhängen;
Einrichtungen (12) zum Analysieren des Datenmusters zur Identifikation einr Flußänderung und zum Analysieren sowohl des der Flußänderung vorhergehenden als auch des dieser nachfolgenden Datenmusters zur Bestimmung von Daten-Teilmustern und zum Rückgewinnen eines Teil-Schreibverzögerungswertes aus dem Verzögerungsspeicher für jedes Daten-Teilmusters und zum Kombinieren des Teil-Schreibverzögerungswertes zur Gewinnung des Schreibverzögerungswertes.

8. Vorrichtung zum Schreiben eines seriellen Datenmusters nach Anspruch 7 oder8, bei der die Verzögerungsschaltung ein Schieberegister (36, 118) zum Empfang des Datenmusters einschließt.

9. Vorrichtung zum Schreiben eines seriellen Datenmusters nach Anspruch 9, bei der die Verzögerungsschaltung weiterhin Einrichtungen (184, 186, 190) zur Korrektur des Schreibverzögerungswertes zur Kompensation von Temperatur- und Spannungsänderungen umfaßt.

10. Vorrichtung zum Schreiben eines seriellen Datenmusters nach Anspruch 9, bei der die Korrektureinrichtung folgende Teile umfaßt:
einen Inverter (184), der zum Empfang des Schreibverzögerungswertes angeordnet ist;
Zeitsteuereinrichtungen (190) zum Umschalten des Ausganges des Inverters für eine eingestellte Zeit derart, daß ein Ringsoszillator mit einer eingestellten Periode gebildet wird; und
einen Verzögerungswandler (186), der zwischen dem Ringoszillator und den Zeitsteuereinrichtungen (190) eingekoppelt ist, um die eingestellten Perioden zu zählen und um einen Korrekturwert für den Schreibverzögerungswert zu berechnen, der von der Anzahl der eingestellten Perioden während der eingestellten Zeit abhängt.

## Revendications

1. Procédé d'écriture d'une configuration sérielle de données sous la forme de transitions de flux sur un support magnétique (24), le procédé comprenant les opérations suivantes :
recevoir une configuration sérielle de données de moyens d'application de données (16);
obtenir une valeur de retard d'écriture, ladite valeur de retard étant fonction d'une tète d'écriture (22), d'un emplacement d'écriture sur le support magnétique et de la configuration de données à écrire ;
analyser ladite configuration de données afin d'identifier une modification du flux ;
analyser la configuration de données à la fois avant et après la modification du flux afin de déduire une configuration de données stéréotypique;
retrouver ladite valeur de retard d'écriture dans une mémoire de retard (4) qui concerne la configuration de données stéréotypique;
écrire la configuration de données avec la valeur de retard d'écriture, et **caractérisé par** :
l'analyse de la configuration de données à la fois avant et après la modification du flux pour déterminer des configurations secondaires de données et pour combiner les configurations secondaires de données afin de déduire la configuration de données stéréotypique.

2. Procédé d'écriture d'une configuration sérielle de données sous la forme de transitions de flux sur un support magnétique (24), le procédé comprenant les opérations suivantes :
recevoir une configuration sérielle de données de moyens d'application de données (16);
obtenir une valeur de retard d'écriture, ladite valeur de retard étant fonction d'une tête d'écriture (22), d'un emplacement d'écriture sur le support magnétique et de la configuration de données à écrire ;
écrire la configuration de données avec la valeur de retard d'écriture, et avant l'écriture de la configuration de données ;
analyser ladite configuration de données afin d'identifier une modification du flux ; **caractérisé par** :
l'analyse de la configuration de données à la fois avant et après la modification du flux afin de déterminer des configurations secondaires de données ;
la récupération d'une valeur de retard d'écriture partielle d'une mémoire de retard pour chaque configuration secondaire de données ; et
la combinaison de la valeur de retard d'écriture partielle afin d'obtenir la valeur de retard d'écriture.

3. Procédé d'écriture d'une configuration sérielle de données selon la revendication 1 ou 2, consistant à partager le support magnétique en une pluralité de zones d'écriture et à déterminer l'emplacement d'écriture selon la situation de l'emplacement d'écriture dans une zone respective parmi les zones d'écriture.

4. Procédé d'écriture d'une configuration sérielle de données selon l'une quelconque des revendications précédentes, dans lequel les valeurs de retard sont déterminées par les actions suivantes :
(1) écrire la configuration de données au moyen de la tête considérée à l'emplacement d'écriture donné ;
(2) lire la configuration de données écrites ;
(3) détecter tout décalage dans le temps entre les UNS logiques dans la configuration de données lues ;
(4) mémoriser le décalage dans le temps comme une valeur de retard d'écriture pour la tête considérée à l'emplacement d'écriture donné et pour la configuration de données ; et
(5) répéter les étapes (1) à (4) pour chaque configuration de données possible.

5. Procédé d'écriture d'une configuration sérielle de données selon l'une quelconque des revendications précédentes, comprenant en outre la correction de la valeur de retard optimale pour compenser les variations de température et de tension.

6. Appareil d'écriture d'une configuration sérielle de données sous la forme de transitions de flux sur un support magnétique (24), l'appareil comprenant :
des moyens d'application de données (16) pour appliquer une configuration sérielle de données ;
des moyens d'enregistrement (20, 22) comportant une tête (22) pour écrire la configuration de données sur le support magnétique ;
une mémoire de retard (26, 40, 60, 166, 168, 170) pour mémoriser un certain nombre de valeurs de retard d'écriture qui dépendent de la tête, de l'emplacement d'écriture sur le support magnétique et de la configuration de données ;
des moyens (12) pour analyser ladite configuration de données afin d'identifier une modification de flux et pour analyser la configuration de données à la fois avant et après la modification du flux pour déterminer des configurations secondaires de données et pour combiner les configurations secondaires de données afin de déduire une configuration de données stéréotypique et pour retrouver ladite valeur de retard d'écriture dans ladite mémoire de retard qui concerne la configuration de données stéréotypique.

7. Appareil d'écriture d'une configuration sérielle de données sous la forme de transitions de flux sur un support magnétique (24), l'appareil comprenant :
des moyens d'application de données (16) pour appliquer une configuration sérielle de données ;
des moyens d'enregistrement (20, 22) comportant une tète (22) pour écrire la configuration de données sur le support magnétique ;
une mémoire de retard (26, 40, 60, 166, 168, 170) pour mémoriser un certain nombre de valeurs de retard d'écriture partielles qui dépendent de la tète, de l'emplacement d'écriture sur le support magnétique et de la configuration de données ;
des moyens (12) pour analyser ladite configuration de données pour identifier une modification de flux et pour analyser la configuration de données à la fois avant et après la modification du flux afin de déterminer des configurations secondaires de données et pour retrouver une valeur de retard d'écriture partielle dans ladite mémoire de retard pour chaque configuration secondaire de données et pour combiner la valeur de retard d'écriture partielle afin d'obtenir la valeur de retard d'écriture.

8. Appareil d'écriture d'une configuration sérielle de données selon la revendication 6 ou 7, dans lequel lesdits éléments de circuit de retard comprennent un registre à décalage (36, 118) pour recevoir la configuration de données.

9. Appareil d'écriture d'une configuration sérielle de données selon l'une quelconque des revendications 6 à 8, dans lequel lesdits éléments de circuit de retard comprennent en outre des moyens (184, 186, 190) pour corriger la valeur de retard d'écriture afin de compenser les variations de température et de tension.

10. Appareil d'écriture d'une configuration sérielle de données selon la revendication 9, dans lequel lesdits moyens de correction comprennent :
- un onduleur (184) disposé pour recevoir la valeur de retard d'écriture ;
- des moyens de synchronisation (190) pour commuter la sortie de l'onduleur pendant un temps déterminé afin de former un oscillateur en anneau ayant une période déterminée ; et
- un convertisseur de retard (186) couplé entre l'oscillateur en anneau et les moyens de synchronisation (190) pour compter les périodes déterminées et pour calculer une valeur de correction de la valeur de retard d'écriture en fonction du nombre de périodes déterminées pendant le temps déterminé.
